# NOUVEAU FASCICULE DE BREVET EUROPEEN

(11) **EP 2 350 416 B2**
(45) Date de publication et mention de la décision concernant l'opposition: **03.04.2019**
(45) Mention de la délivrance du brevet: 12.03.2014
(21) Numéro de dépôt: 09760167.8
(22) Date de dépôt: 16.10.2009
(51) Int. Cl.: E06B 3/67, C03C 17/36

(54) **VITRAGE MULTIPLE INCORPORANT AU MOINS UN REVETEMENT ANTIREFLET ET UTILISATION D'UN REVETEMENT ANTIREFLET DANS UN VITRAGE MULTIPLE**
MINDESTENS EINE BLENDSCHUTZBESCHICHTUNG ENTHALTENDE MEHRFACHVERGLASUNGSEINHEIT UND VERWENDUNG EINER BLENDSCHUTZBESCHICHTUNG IN EINER MEHRFACHVERGLASUNGSEINHEIT
MULTIPLE GLAZING UNIT INCLUDING AT LEAST ONE ANTI-GLARE COATING, AND USE OF AN ANTI-GLARE COATING IN A MULTIPLE GLAZING UNIT

(30) Priorité: 17.10.2008 FR 0857085
(43) Date de publication de la demande: 03.08.2011
(73) Titulaire: Saint-Gobain Glass France, 92400 Courbevoie (FR)
(72) Inventeur: JANSSEN, David, 47918 Tönisvorst (DE); NEANDER, Marcus, 52249 Eschweiler (DE); REYMOND, Vincent, 92160 Antony (FR); BILLERT, Ulrich, 78170 La Celle-Saint-Cloud (FR)
(74) Mandataire: Saint-Gobain Recherche
(86) Numéro de dépôt international: PCT/FR2009/051982
(87) Numéro de publication internationale: WO 2010/043828

(56) Documents cités:
- EP-A1- 0 722 913
- EP-A1- 2 138 667
- EP-A2- 0 796 825
- EP-A2- 0 829 610
- WO-A1-2007/042688
- CA-A1- 965 826
- DE-A1- 10 258 377
- DE-A1- 19 631 420
- US-A- 5 128 181
- US-A- 5 156 894
- US-A- 5 344 718
- US-A- 6 059 909
- US-B1- 6 344 288
- US-B1- 6 632 491
- US-B2- 8 883 277

## Description

L'invention concerne un vitrage multiple comportant au sens de L'invention au moins trois substrats, du type substrat verrier, qui sont maintenus ensemble par une structure de châssis, dans lequel au moins deux lames de gaz intermédiaires sont disposées chacune entre deux substrats.

L'invention concerne plus particulièrement un triple vitrage comportant trois substrats qui sont maintenus ensemble par une structure de châssis, dans lequel deux lames de gaz intermédiaires sont disposées chacune entre deux substrats.

L'invention concerne par ailleurs l'utilisation de substrats pour fabriquer des vitrages multiple d'isolation thermique et/ou de protection solaire.

Ces vitrages multiples peuvent être destinés aussi bien à équiper les bâtiments que les véhicules, en vue notamment de diminuer l'effort de climatisation et/ou d'empêcher une surchauffe excessive (vitrages dits « de contrôle solaire ») et/ou diminuer la quantité d'énergie dissipée vers l'extérieur (vitrages dits « bas émissifs ») entraînée par l'importance toujours croissante des surfaces vitrées dans les bâtiments et les habitacles de véhicules.

Ces vitrages peuvent par ailleurs être intégrés dans des vitrages présentant des fonctionnalités particulières, comme par exemple des vitrages chauffants ou des vitrages électrochromes.

Un type d'empilement de couches connu pour conférer aux substrats de telles propriétés d'isolation thermique et/ou de protection solaire est constitué d'une couche métallique fonctionnelle à propriétés de réflexion dans L'infrarouge et/ou dans le rayonnement solaire, notamment une couche fonctionnelle métallique à base d'argent ou d'alliage métallique contenant de l'argent.

Dans ce type d'empilement, la couche fonctionnelle se trouve ainsi disposée entre deux revêtements diélectriques comportant chacun en général plusieurs couches qui sont chacune en un matériau diélectrique du type nitrure et notamment nitrure de silicium ou d'aluminium ou du type oxyde. Du point de vu optique, le but de ces revêtements qui encadrent la couche fonctionnelle métallique est « d'antirefléter » cette couche fonctionnelle métallique.

Un revêtement de blocage est toutefois intercalé parfois entre un ou chaque revêtement diélectrique et la couche métallique fonctionnelle, le revêtement de blocage disposé sous la couche fonctionnelle en direction du substrat la protège Lors d'un éventuel traitement thermique à haute température, du type bombage et/ou trempe et le revêtement de blocage disposé sur la couche fonctionnelle à L'opposé du substrat protège cette couche d'une éventuelle dégradation lors du dépôt du revêtement diélectrique supérieur et lors d'un éventuel traitement thermique à haute température, du type bombage et/ou trempe.

Actuellement, il existe des empilements de couches minces bas-émissifs à une seule couche fonctionnelle (désignés par la suite sous l'expression « empilement monocouche fonctionnelle »), à base d'argent, présentant lorsqu'ils sont montés dans un double vitrage classique, constitué de deux feuilles de verre de 4 mm séparée par une lame de gaz à 90 % d'argon et 10 % d'air d'une épaisseur de 16 mm, dont l'une des feuilles est revêtu de l'empilement monocouche fonctionnelle : la feuille la plus à l'intérieur du bâtiment lorsque L'on considère le sens incident de la Lumière solaire entrant dans le bâtiment ; sur sa face tournée vers la lame de gaz (configuration : 4-16(Ar-90%)-4 dans laquelle l'empilement monocouche fonctionnelle est en face intérieure dite « face 3 ») :
- une transmission lumineuse dans Le visible T_{L} de l'ordre de 75 à 80 %, voire plus ;
- une réflexion lumineuse dans le visible R_{L} de l'ordre de 20 à 10 % ; voire moins ;
- un facteur solaire (encore appelée « valeur g » ou « g-value » en anglais) d'au moins 0,6 et de L'ordre de 0,63 à 0,68 ; voire plus ; et
- un coefficient de transfert thermique (encore appelée « valeur U » ou « U-value en anglais) égal ou inférieur à 1,5 et de l'ordre de 1,2 à 1,1 ; voire légèrement moins.

Dans une structure en triple vitrage, le substrat porteur du revêtement isolant peut être en face 2 et/ou en face 3 et/ou en face 5, lorsque l'on considère que le sens incident de la lumière solaire traverse les faces dans l'ordre croissant de leur numéro et en commençant à noter la face la plus à L'extérieur par le numéro 1.

Toutefois, l'intégration de ce (ou de ces) revêtement(s) isolant(s), si elle permet effectivement d'améliorer l'isolation thermique en diminuant le coefficient de transfert thermique, provoque par ailleurs une diminution de la transmission lumineuse dans le visible et une diminution du facteur solaire.

Ainsi, le vitrage multiple apparaît moins transparent dans le visible que le double vitrage tel que celui présenté ci-avant et le gain d'énergie à L'intérieur du logement par le rayonnement solaire est moindre.

Le but de l'invention est de parvenir à remédier aux inconvénients de l'art antérieur, en mettant au point un nouveau type de vitrage multiple qui présente une transmission lumineuse élevée et un facteur solaire élevé, tout au moins une transmission Lumineuse et un facteur solaire similaires à ceux d'un double vitrage à isolation thermique renforcée.

L'invention a ainsi pour objet, dans son acception la plus large, un vitrage multiple selon la revendication 1.

Par « revêtement antireflet », il faut comprendre tout élément ou tout système d'interférence optique présentant un indice de réfraction exact ou un indice de réfraction moyen qui est compris entre celui du verre (indice n d'environ 1,5) et celui de l'air (indice n d'environ 1).

Les indices optiques (encore appelés « indices de réfraction ») indiqués ici dans le présent document sont ceux mesurés à la longueur d'onde de 550 nm, comme habituellement.

Un substrat central dont les deux faces sont chacune en contact avec une lame de gaz intermédiaire comporte, de préférence, sur au moins une face en contact avec une lame de gaz intermédiaire, et de préférence sur ses deux faces, un revêtement antireflet.

De préférence, en vis-à-vis par rapport à toutes les lames de gaz intermédiaire, une face d'un substrat comporte un revêtement antireflet et l'autre face de L'autre substrat comporte un revêtement isolant à propriétés de réflexion dans l'infrarouge et/ou dans le rayonnement solaire.

Ledit revêtement isolant comporte un empilement de couches minces bas-émissif ou de contrôle solaire, cet empilement comportant une couche fonctionnelle à propriétés de réflexion dans l'infrarouge et/ou dans le rayonnement solaire, métallique, à base d'argent ou d'alliage métallique contenant de l'argent.

Ledit empilement de couches minces comporte, une couche fonctionnelle métallique à base d'argent ou d'alliage métallique contenant de l'argent, et deux revêtements diélectriques, lesdits revêtements comportant chacun au moins une couche diélectrique, Ladite couche fonctionnelle étant disposée entre les deux revêtements diélectriques, la couche fonctionnelle étant éventuellement déposée directement sur un revêtement de sous-blocage disposé entre la couche fonctionnelle et le revêtement diélectrique sous-jacent à la couche fonctionnelle.

L'empilement de couches minces comporte une seule couche fonctionnelle métallique à base d'argent ou d'alliage métallique contenant de l'argent. Le rapport de l'épaisseur optique du revêtement diélectrique sous-jacent sur l'épaisseur optique du revêtement diélectrique sus-jacent, est de préférence compris entre 1,05 et 1,4 en incluant ces valeurs, éventuellement compris entre 1,08 et 1,3 en incluant ces valeurs.

Ledit revêtement diélectrique sous-jacent à la couche fonctionnelle comporte, de préférence, une couche diélectrique hautement réfringente, cette couche hautement réfringente présentant un indice optique supérieur à 2,2, et de préférence compris entre 2,3 et 2,8 en incluant ces valeurs, éventuellement compris entre 2,4 et 2,7 en incluant ces valeurs.

La présente invention se rapporte aussi à l'utilisation selon la revendication 7. Un revêtement antireflet est ainsi utilisé sur au moins une face d'au moins un substrat pour réaliser un vitrage multiple selon l'invention comportant au moins trois substrats qui sont maintenus ensemble par une structure de châssis et dans lequel au moins deux lames de gaz intermédiaire sont disposées chacune entre deux substrats, ledit revêtement antireflet étant en contact avec une lame de gaz intermédiaire et étant en vis-à-vis par rapport à ladite lame de gaz intermédiaire avec un revêtement isolant à propriétés de réflexion dans l'infrarouge et/ou dans le rayonnement solaire.

Dans le cadre de cette utilisation, la (ou les) face(s) comportant ledit revêtement antireflet est (ou sont), de préférence, la (ou les) face(s) du substrat central du vitrage multiple, lesdites faces étant chacune en contact avec une lame de gaz intermédiaire.

De préférence, en vis-à-vis par rapport à toutes les lames de gaz intermédiaires, une face d'un substrat comporte un revêtement antireflet et l'autre face de L'autre substrat comporte un revêtement isolant à propriétés de réflexion dans l'infrarouge et/ou dans le rayonnement solaire.

Dans l'utilisation, ledit revêtement isolant comporte un empilement de couches minces bas-émissif ou de contrôle solaire, cet empilement comportant une seule couche fonctionnelle à propriétés de réflexion dans l'infrarouge et/ou dans le rayonnement solaire, métallique, à base d'argent ou d'alliage métallique contenant de l'argent.

Ledit empilement de couches minces comporte, une couche fonctionnelle métallique à base d'argent ou d'alliage métallique contenant de l'argent, et deux revêtements diélectriques. Lesdits revêtements comportant chacun au moins une couche diélectrique, ladite couche fonctionnelle étant disposée entre les deux revêtements diélectriques, La couche fonctionnelle étant éventuellement déposée directement sur un revêtement de sous-blocage disposé entre la couche fonctionnelle et le revêtement diélectrique sous-jacent à la couche fonctionnelle.

Cet empilement de couches monocouche fonctionnelle lorsqu'il est bas-émissif, présente une faible résistance par carré (et donc une faible émissivité), une transmission lumineuse élevée et une couleur relativement neutre, en particulier en réflexion côté couches (mais aussi côté opposé : « côté substrat »), et ces propriétés sont de préférence conservées dans une plage restreinte que l'empilement subisse ou non, un (ou des) traitement(s) thermique(s) à haute température du type bombage et/ou trempe et/ou recuit.

La couche diélectrique qui est au minimum comprise dans chaque revêtement diélectrique, comme défini ci-avant, présente un indice optique compris entre 1,6 et 2,8 en incluant ces valeurs, ou, de préférence, entre 1,9 et 2,2 en incluant ces valeurs, sauf s'il s'agit d'une couche diélectrique hautement réfringente.

L'empilement bas-émissif selon l'invention est tel que la résistance par carré R en ohms par carré de la couche fonctionnelle (qui est liée directement à l'émissivité) est inférieure à 10 ohms/carré et de l'ordre d'environ 5 à 3 ohms/carré.

Dans une variante particulière, au moins un revêtement diélectrique, le revêtement diélectrique sous-jacent et/ou le revêtement diélectrique sus-jacent, comporte(nt) au moins une couche diélectrique à base de nitrure de silicium, éventuellement dopé à l'aide d'au moins un autre élément, comme l'aluminium.

Dans une variante particulière, la dernière couche du revêtement diélectrique sous-jacent, celle la plus éloignée du substrat, est une couche de mouillage à base d'oxyde, notamment à base d'oxyde de zinc, éventuellement dopé à l'aide d'au moins un autre élément, comme l'aluminium.

Dans une variante toute particulière, le revêtement diélectrique sous-jacent comprend au moins une couche de Lissage non cristallisée en un oxyde mixte, ladite couche de lissage étant en contact avec une couche de mouillage sus-jacente cristallisée et notamment une couche à base d'oxyde de zinc.

De préférence, le revêtement de sous-blocage comprend une couche fine à base de nickel ou de titane présentant une épaisseur géométrique e telle que 0,2 nm ≤ e ≤ 1,8 nm.

Dans une version particulière, au moins une couche fine à base de nickel, et notamment celle du revêtement de sur-blocage, comprend du chrome, de préférence dans des quantités massiques de 80 % de Ni et 20 % de Cr.

Dans une autre version particulière, au moins une couche fine à base de nickel, et notamment celle du revêtement de sur-blocage, comprend du titane, de préférence dans des quantités massique de 50 % de Ni et 50 % de Ti.

La dernière couche du revêtement diélectrique sus-jacent, celle la plus éloignée du substrat, est, de préférence, à base d'oxyde, déposée de préférence sous stoechiométrique, et notamment est à base de titane (TiOₓ) ou à base d'oxyde mixte de zinc et d'étain (SnZnOₓ), ou à base d'oxyde de zirconium (ZrOₓ), éventuellement dopé par un autre élément à raison de 10 % en masse au maximum.

L'empilement peut ainsi comporter une dernière couche (« overcoat » en anglais), c'est-à-dire une couche de protection, déposée de préférence sous stoechiométrique. Cette couche se retrouve oxydée pour l'essentiel stoechiométriquement dans l'empilement après le dépôt.

Cette couche de protection présente, de préférence, une épaisseur comprise entre 0,5 et 10 nm.

Dans le vitrage selon l'invention, chaque substrat peut être monolithique et peut être clair, extra-clair, voire coloré.

Dans le vitrage selon l'invention au moins un substrat peut présenter une structure feuilletée, associant notamment au moins deux substrats rigides du type verre par au moins une feuille de polymère thermoplastique, afin de présenter une structure de type verre/feuille(s) de polymère/verre. Le polymère peut notamment être à base de polyvinylbutyral PVB, éthylène vinylacétate EVA, polyéthylène téréphtalate PET, potychlorure de vinyle PVC.

Les substrats du vitrage selon l'invention sont, de préférence, aptes à subir un traitement thermique sans dommage pour le (ou Les) revêtement(s) antireflet et/ou pour le (ou les) revêtement(s) isolant(s).

Ces substrats sont donc éventuellement bombés et/ou trempés.

Avantageusement, La présente invention permet ainsi de réaliser un vitrage multiple, et notamment triple vitrage, présentant une esthétique favorable très proche de celle de double vitrage (T_{Lvis} ≥ 60 %, R_{Lvis} ≤ 30 %, couleurs neutres en réflexion), mais avec des caractéristiques d'isolation thermique bien supérieures et un facteur solaire similaire à ceux des doubles vitrages comparables.

Avantageusement également, le vitrage multiple intègre au moins d'une part un revêtement antireflet et d'autre part un revêtement isolant à propriétés de réflexion dans l'infrarouge et/ou dans le rayonnement solaire qui sont en vis-à-vis l'un de l'autre par rapport à une lame de gaz intermédiaire et qui se trouvent ainsi tous les deux protégés des agressions extérieures. Il n'est donc pas nécessaire de prévoir que ces revêtements soient résistants mécaniquement et chimiquement.

Par ailleurs, les vitrages selon L'invention sont faciles à fabriquer et permettent d'atteindre des caractéristiques énergétiques intéressantes pour un faible coût de développement.

Les détails et caractéristiques avantageuses de l'invention ressortent des exemples non limitatifs suivants, illustrés à l'aide des figures ci-jointes :
- la figure 1 illustre une vue en coupe transversale d'un double vitrage de l'art antérieur selon l'exemple 1 ;
- la figure 2 illustre une vue en coupe transversale d'un triple vitrage selon l'exemple 2 ;
- la figure 3 illustre une vue en coupe transversale d'un triple vitrage selon l'invention, exemple 3 ;
- la figure 4 illustre une vue en coupe transversale d'un autre triple vitrage selon l'invention, exemple 4 ;
- la figure 5 illustre une vue en coupe transversale d'un quadruple vitrage selon l'invention ; et
- La figure 6 illustre un revêtement isolant selon l'invention comportant un empilement monocouche fonctionnelle, la couche fonctionnelle étant pourvue d'un revêtement de sous-blocage et d'un revêtement de sur-blocage et l'empilement étant en outre pourvu d'un revêtement de protection optionnel.

Dans ces figures, les proportions entre Les différents éléments ne sont pas respectées afin de faciliter leur lecture.

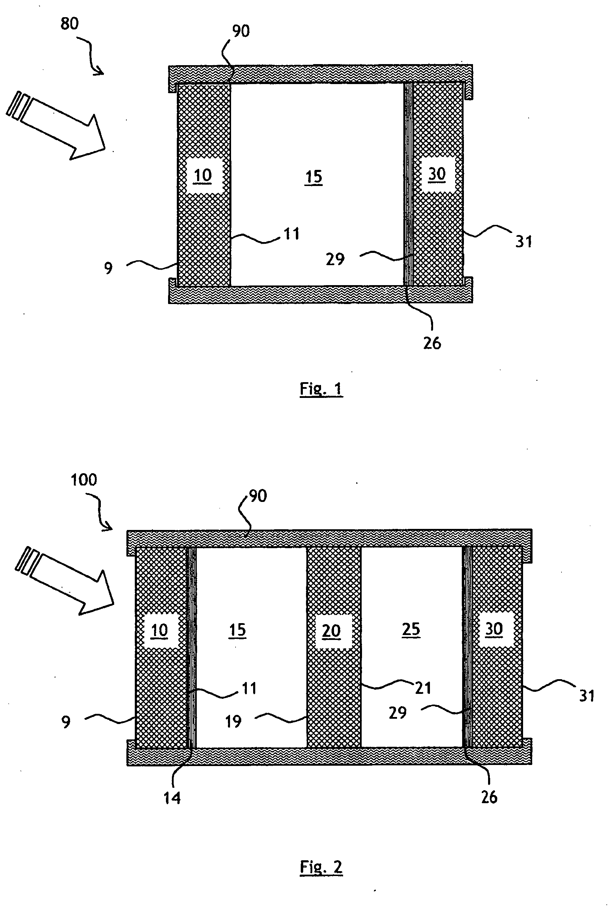

La figure 1 illustre la réalisation d'un double vitrage 80 (DGU) de l'art antérieur présentant la configuration : 4-16 (Ar 90%)-4, c'est-à-dire constitué de deux feuilles de verre transparent de 4 mm, réalisant chacune un substrat 10, 30, séparées par une lame de gaz intermédiaire 15 à 90 % d'argon et 10 % d'air d'une épaisseur de 16 mm, Le tout étant maintenu ensemble par une structure de châssis 90.

Une des feuilles de verre, le substrat 30, est revêtu sur sa face intérieure 29 tournée vers la lame de gaz intermédiaire d'un revêtement isolant 26 constitué d'un empilement monocouche fonctionnelle décrit ci-après : la feuille la plus à l'intérieur du bâtiment lorsque l'on considère le sens incident de la lumière solaire entrant dans le bâtiment illustré par la double flèche orientée sur la figure de La gauche vers la droite (l'empilement monocouche fonctionnelle est ainsi en face intérieure dite « face 3 »).

Cette réalisation constitue l'exemple 1 ci-après.

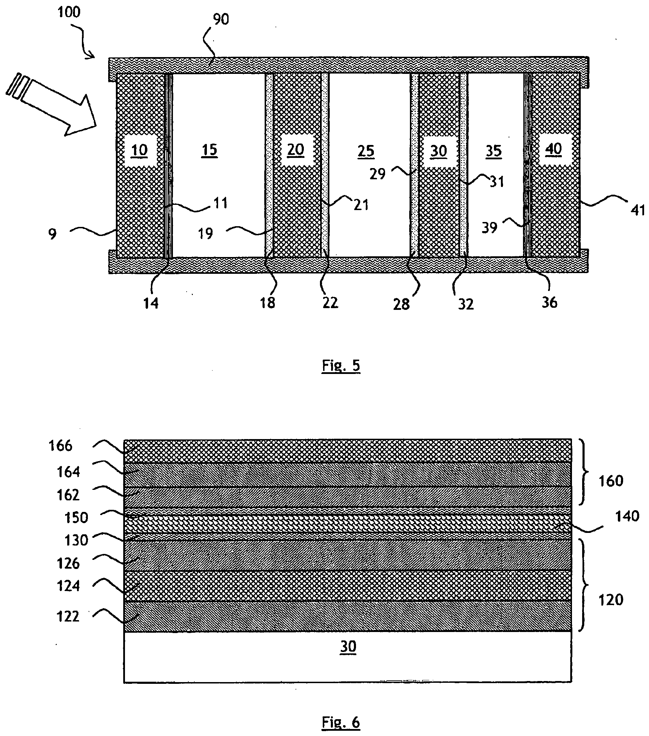

La figure 6 illustre La structure de l'empilement monocouche fonctionnelle déposé sur le substrat 30 verrier, dans laquelle la couche fonctionnelle 140 unique est disposée entre deux revêtements diélectriques, le revêtement diélectrique sous-jacent 120 situé en dessous de la couche fonctionnelle 140 en direction du substrat 30 et le revêtement diélectrique sus-jacent 160 disposé au-dessus de la couche fonctionnelle 140 à l'opposé du substrat 30.

Ces deux revêtements diélectrique 120, 160, comportent chacun au moins une couche diélectrique 122, 124, 126 ; 162, 164, 166.

Eventuellement, d'une part la couche fonctionnelle 140 peut être déposée sur un revêtement de sous-blocage 130 disposé entre le revêtement diélectrique sous-jacent 120 et la couche fonctionnelle 140 et d'autre part la couche fonctionnelle 140 peut être déposée directement sous un revêtement de sur-blocage 150 disposé entre la couche fonctionnelle 140 et le revêtement diélectrique sus-jacent 160.

Sur la figure 6 on constate que le revêtement diélectrique 120 inférieur comporte trois couches diélectrique 122, 124 et 126 , que le revêtement diélectrique 160 supérieur comporte trois couches diélectrique 162, 164, 166 et que ce revêtement diélectrique 160 se termine par une couche de protection optionnelle, en particulier à base d'oxyde, notamment sous stoechiométrique en oxygène.

Le tableau 1 ci-après illustre les épaisseurs géométriques (et non pas les épaisseurs optiques) en nanomètres de chacune des couches du revêtement isolant qui a été utilisé pour tous les exemples 2 à 4 ci-après :

**Tableau 1**

| Couche | Matériau | |
|---|---|---|
| 166 | SnZnOₓ:Sb | 2 |
| 164 | Si₃N₄:Al | 25 |
| 162 | ZnO:Al | 5 |
| 150 | Ti | 1 |
| 140 | Ag | 10 |
| 126 | ZnO:Al | 5 |
| 124 | TiO₂ | 15 |
| 122 | SnO₂ | 15 |

Le revêtement diélectrique sous-jacent 120 comprend une couche diélectrique 122 en oxyde d'étain SnO₂ (d'indice n = 2,0) et au moins une couche diélectrique 124 hautement réfringente en oxyde de titane TiO₂ (d'indice n = 2,4), ladite couche diélectrique 124 étant en contact avec une couche diélectrique 126 de mouillage sus-jacente qui permet d'améliorer la cristallisation de l'argent, ce qui améliore sa conductivité.

Dans cet empilement, la couche de mouillage, tout comme la couche diélectrique 162, sont en oxyde de zinc dopé à l'aluminium ZnO:Al (d'indice n = 1,9) qui a été déposée à partir d'une cible métallique constitué de zinc dopé à 2 % en masse d'aluminium.

La couche diélectrique 164 est en nitrure de silicium Si₃N₄ dopé à 8 % en masse d'aluminium (d'indice n = 2,0).

La couche diélectrique 166 est une couche de terminaison et de protection et est ici un oxyde mixte de zinc et d'étain qui est dopé à l'antimoine (d'indice n = 2,0), cette couche ayant été déposée à partir d'une cible métallique constitué des rapports massiques 65:34:1 respectivement pour Zn:Sn:Sb.

On constate que l'épaisseur optique du revêtement diélectrique sous-jacent 120 est : 15x2 + 15x2,4 + 5x1,9 = 75,5 nm et que l'épaisseur optique du revêtement diélectrique sus-jacent 160 est : 5x1,9 + 25x2 + 2x2 = 63,5 ; soit un rapport d'épaisseur optique e₁₂₀/e₁₆₀ = 1,19.

Sur cette base, des triples-vitrages (TGU) ont été réalisés.

Un exemple 2 de vitrage multiple 100 consistant en un triple vitrage a été réalisé. Ce vitrage, illustré en figure 2, présente la configuration : 4-12 (Ar 90%)-4-12 (Ar 90%)-4, c'est-à-dire qu'il est constitué de trois feuilles de verre transparent de 4 mm, réalisant chacune un substrat 10, 20, 30, séparées deux par deux par une Lame de gaz intermédiaire 15, 25 à 90 % d'argon et 10 % d'air d'une épaisseur chacune de 12 mm, le tout étant maintenus ensemble par une structure de châssis 90.

Les deux substrats 10, 30 extérieurs de ce triple vitrage sont revêtus, chacun, sur sa face intérieure 11, 29 tournée vers la lame de gaz intermédiaire 15, 25, d'un revêtement isolant 14, 26 constitué de l'empilement monocouche fonctionnelle décrit ci-avant : les empilements monocouche fonctionnelle sont ainsi en faces dites « face 2 » et « face 5).

Le substrat 20 central de ce triple vitrage, celui dont les deux faces 19, 21 sont en contact respectivement avec Les lames de gaz intermédiaire 15 et 25, n'est revêtu d'aucun revêtement sur aucune de ces faces.

Cet exemple 2 permet d'obtenir une meilleure isolation thermique que celle du double vitrage de l'exemple 1, qui se traduit par un coefficient U plus faible, mais la transmission Lumineuse de vitrage est plus faible que celle du double vitrage de l'exemple 1 et son facteur solaire est également plus faible.

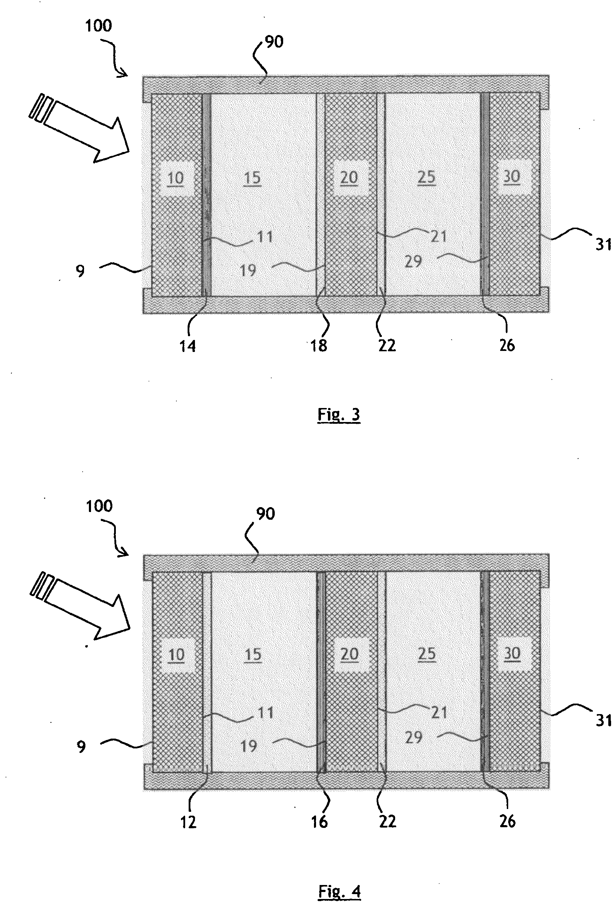

Pour remédier à ce problème, un exemple 3 de triple vitrage, illustré en figure 3, a été réalisé selon l'invention. Ce triple vitrage présente la même configuration de vitrage multiple que l'exemple 2 : 4-12 (Ar 90%)-4-12 (Ar 90%)-4, c'est-à-dire qu'il est constitué de trois feuilles de verre transparent de 4 mm, réalisant chacune un substrat 10, 20, 30, séparées deux par deux par une lame de gaz intermédiaire 15, 25 à 90 % d'argon et 10 % d'air d'une épaisseur chacune de 12 mm, le tout étant maintenus ensemble par une structure de châssis 90.

Comme pour l'exemple 2, les deux substrats 10, 30 extérieurs de ce triple vitrage sont revêtus, chacun, sur sa face intérieure 11, 29 tournée vers la lame de gaz intermédiaire 15, 25, d'un revêtement isolant 14, 26 constitué de l'empilement monocouche fonctionnelle décrit ci-avant : les empilements monocouche fonctionnelle sont ainsi en faces dites « face 2 » et « face 5 »).

Toutefois, dans le cadre de l'exemple 3, les deux faces 19, 21 du substrat 20 central de ce triple vitrage, qui sont en contact respectivement avec les lames de gaz intermédiaire 15 et 25, sont chacune revêtue d'un revêtement antireflet 18, 22.

Cet exemple 3 permet d'obtenir une isolation thermique aussi bonne que celle de l'exemple 2, qui se traduit par un coefficient U identique, mais la transmission Lumineuse de vitrage est plus élevée que celle du triple vitrage de l'exemple 2 et son facteur solaire est également plus élevé : il est alors possible d'obtenir une transmission lumineuse et un facteur solaire sensiblement identiques à ceux du double vitrage de l'exemple 1.

Un autre exemple de triple vitrage, l'exemple 4, illustré en figure 4, a été réalisé selon L'invention. Ce triple vitrage présente la même configuration que les exemples 2 et 3 : 4-12 (Ar 90%)-4-12 (Ar 90%)-4, c'est-à-dire qu'il est constitué de trois feuilles de verre transparent de 4 mm, réalisant chacune un substrat 10, 20, 30, séparées deux par deux par une lame de gaz intermédiaire 15, 25 à 90 % d'argon et 10 % d'air d'une épaisseur chacune de 12 mm, le tout étant maintenus ensemble par une structure de châssis 90.

Toutefois, dans le cadre de l'exemple 4, les substrats 20, 30 de ce triple vitrage sont revêtus, chacun, sur sa face intérieure 19, 29 tournée vers la lame de gaz intermédiaire 15, 25, d'un revêtement isolant 16, 26 constitué de l'empilement monocouche fonctionnelle décrit ci-avant : les empilements monocouche fonctionnelle sont ainsi en faces dites « face 3 » et « face 5) ; par ailleurs, Les deux faces 11, 21 des substrats 10, 20 de ce triple vitrage, qui sont en contact respectivement avec les lames de gaz intermédiaire 15 et 25, sont chacune revêtue d'un revêtement antireflet 12, 22.

Cet exemple 4 permet d'obtenir une isolation thermique aussi bonne que celle de l'exemple 3, qui se traduit par un coefficient U identique, et une transmission lumineuse aussi élevée que celle du triple vitrage de l'exemple 3, mais un facteur solaire encore plus élevé que celui de l'exemple 3.

Pour les exemples selon L'invention, le revêtement antireflet 12, 18, 22 est constitué d'un empilement de quatre couches minces de structure :
Substrat / Si₃N₄ / SiO₂ / Si₃N₄ / SiO₂

Ce revêtement présente ainsi, en partant du substrat, une succession : haut indice, bas indice, haut indice, bas indice.

Il a été réalisé selon l'enseignement de la demande internationale de brevet N° WO 2007/104874.

Toutefois, un tel dépôt de couches minces peut être remplacé par tout revêtement antireflet équivalent, notamment tout revêtement antireflet à base de couche poreuse, comme par exemple ceux connus de l'enseignement de la demande internationale de brevet N° WO 2008/059170.

Un tel dépôt de couches minces peut aussi être remplacé par tout revêtement antireflet équivalent constitué d'un traitement de la surface du verre par gravage (« etching » en anglais), comme celui connu par exemple du brevet américain N° US 2,490,662 ; il est ainsi possible de créer une structure silicate squelétisée présentant un indice de réfraction entre 1,0 et 1,3 sur une épaisseur de l'ordre de 50 à 200 nm, et de préférence de 60 à 150 nm, à la surface du substrat.

Le tableau 2 ci-après illustre résume les principales caractéristiques des exemples 1 à 4 :

**Tableau 2**

| Couche | Ex. 1 | Ex. 2 | Ex. 3 | Ex. 4 |
|---|---|---|---|---|
| T_{Lvis} (%) | 80 | 74 | 79 | 79 |
| R_{Lvis} (%) | 12 | 15 | 10 | 10 |
| g | 0,63 | 0,6 | 0,62 | 0,66 |
| U | 1,1 | 0,7 | 0,7 | 0,7 |

Dans ce tableau, les caractéristiques optiques et énergétiques présentées consistent en :
- T_{Lvis}, transmission lumineuse T_{L} dans le visible en %, mesurées selon l'illuminant D65,
- R_{Lvis}, réflexion lumineuse R_{L} dans le visible en %, mesurées selon l'illuminant D65,
- le coefficient g, et
- le coefficient U, en W.m⁻².K⁻¹.

D'une manière habituelle, dans tout le présent document :
- le coefficient g (« g-value » en anglais), désigne le facteur solaire, c'est-à-dire le rapport de l'énergie totale entrant dans le local à travers le vitrage sur l'énergie solaire incidente totale. Ce rapport, calculé selon la norme EN 410, est donc compris entre 0 et 1.
- le coefficient U (« U-value » en anglais), encore appelé parfois « coefficient K » désigne le coefficient de transmission thermique à travers le vitrage. Il désigne la quantité de chaleur traversant la paroi, en régime stationnaire, par unité de surface et pour une différence de température unitaire entre les ambiances situées de part et d'autre du vitrage, sans tenir compte des effets de bords de la structure de châssis. Il est généralement, comme c'est le cas ici, calculé selon la norme EN 673 et est exprimé en W.m⁻².K⁻¹.

Il est à noter que pour les exemples 2, 3 et 4, les substrats 10, 20, 30 sont en verre extra-clair commercialisés par La société SAINT-GOBAIN sous La dénomination Diamant.

Des exemples similaires, numérotées 2', 3' et 4' ont été réalisés en utilisant des substrats 10, 20, 30 en verre standard commercialisés par La société SAINT-GOBAIN sous la dénomination Planilux.

Ces substrats permettent d'obtenir les caractéristiques résumées dans le tableau 3 ci-après :

**Tableau 3**

| Couche | Ex. 2' | Ex. 3' | Ex. 4' |
|---|---|---|---|
| T_{Lvis} (%) | 70 | 75 | 75 |
| R_{Lvis} (%) | 14 | 9 | 9 |
| g | 0,55 | 0,57 | 0,60 |
| U | 0,7 | 0,7 | 0,7 |

En outre, il a été constaté que le facteur solaire et la transmission Lumineuse pouvaient chacun être augmenté d'au moins 1% et en général d'environ 2% en rajoutant un revêtement antireflet sur une face extérieure du triple vitrage, c'est-à-dire en face 1 ou en face 6 et que le facteur solaire et la transmission Lumineuse pouvaient chacun être augmenté d'au moins 2% et en général d'environ 4 % en rajoutant un revêtement antireflet sur les deux faces extérieures du triple vitrage, c'est-à-dire en face 1 et en face 6.

Trois autres exemples, numérotés 5, 6, 7 ont été réalisés sur la base, respectivement des exemples 1 à 3 en réalisant le revêtement isolant 14 sous la forme d'un élément électrochrome, c'est-à-dire en substituant le substrat 10 monolithique par un substrat feuilleté intégrant un système actif du type système électrochrome simple (non doublé), en suivant L'enseignement des demandes de brevet N° EP 867 752 et EP 831 360.

Le tableau 4 ci-après illustre résume les principales caractéristiques des exemples 5 à 7 lorsque l'électrochrome n'est pas actif :

**Tableau 4**

| Couche | Ex. 5 | Ex. 6 | Ex. 7 |
|---|---|---|---|
| T_{Lvis} (%) | 59 | 52 | 55 |
| R_{Lvis} (%) | 12 | 14 | 12 |
| g | 0,4 | 0,4 | 0,4 |
| U | 1,3 | 1 | 1 |

Dans le cadre de cette série d'exemple aussi, la solution de triple vitrage de l'exemple 7, qui est hors invention, permet d'obtenir une isolation thermique aussi bonne que celle du triple vitrage de l'exemple 6 qui n'est pas selon l'invention, qui se traduit par un coefficient U sensiblement identique, mais la transmission lumineuse du triple vitrage de l'exemple 7 est plus élevée que celle du triple vitrage de l'exemple 6 et son facteur solaire est également identique : il est alors possible d'obtenir une transmission lumineuse et un facteur solaire sensiblement identiques à ceux du double vitrage de l'exemple 5.

L'utilisation de revêtement antireflet dans un triple vitrage intégrant un système actif du type système électrochrome permet ainsi de conserver un niveau de transparence (transmission Lumineuse dans le visible) élevé à l'état décoloré, et d'obtenir un coefficient g élevé à L'état décoloré, ce qui peut être très utile pour des vitrages de façade de bâtiments.

Les systèmes actifs sont les systèmes électrochimiques en général, et plus particulièrement les systèmes électrocommandables du type systèmes à propriétés énergétiques et/ou optiques variables.

Les systèmes électrocommandables permettent, notamment, d'obtenir des vitrages dont on peut modifier à volonté l'obscurcissement/le degré de vision ou de filtration des rayonnements thermiques/solaires. Il s'agit par exemple des vitrages viologènes, qui permettent de régler la transmission ou L'absorption lumineuse, comme décrits dans le brevet américain N° US-5,239,406.

Il existe aussi les systèmes appelés "valves optiques" : il s'agit de films à base de polymère dans lesquels sont disposées des microgouttelettes contenant des particules aptes à se placer selon une direction privilégiée sous l'action d'un champ électrique. Un exemple en est décrit dans la demande internationale de brevet N° WO 93/09460.

Il existe aussi Les systèmes à cristaux liquides, d'un mode de fonctionnement similaire aux précédents : ils utilisent un film de polymère placé entre deux couches conductrices et dans lequel sont dispersées des gouttelettes de cristaux liquides, notamment nématiques à anisotropie diélectrique positive. Quand le film est sous tension, les cristaux liquides sont orientés selon un axe privilégié, ce qui autorise la vision. Hors tension, le film devient diffusant. Des exemples en sont décrits dans les brevets EP-88 126, EP-268 877, EP-238 164, EP-357 234, EP-409 442 et EP-964 288. On peut aussi citer les polymères à cristaux liquides cholestériques, comme ceux décrits dans le brevet WO 92/19695 et les systèmes à cristaux liquides qui commutent avec variation de transmission lumineuse TL.

Il y a aussi les vitrages électrochromes, qui permettent de moduler la transmission lumineuse et thermique. Ils sont décrits, notamment, dans les brevets EP-253 713, EP-670 346, l'électrolyte étant sous forme d'un polymère ou d'un gel et les autres couches étant de type minéral. Un autre type est décrit dans les demandes de brevets EP-867 752, EP-831 360, WO 00/57243, WO 00/03289, l'électrolyte étant cette fois sous La forme d'une couche essentiellement minérale, l'ensemble des couches du système étant alors essentiellement minérale : on désigne communément ce type de système électrochrome sous le terme d'électrochrome " tout-solide ". Il existe aussi des systèmes électrochromes où l'ensemble des couches est de type polymère, on parle alors d'électrochrome " tout-polymère ".

De façon générale, les systèmes électrochromes comportent deux couches de matériau électrochrome séparées par une couche d'électrolyte et encadrées par deux couches électroconductrices.

Tout système actif est porté par un substrat qui peut être un substrat 10, 20, 30. Il peut aussi être associé, sans lame de gaz intermédiaire, avec au moins un autre substrat, voire plusieurs autres substrats, qu'il(s) soi(en)t minéral(aux) ou synthétique(s) ; dans ce cas, en l'absence de lame de gaz intermédiaire, tout l'ensemble du système est considéré comme formant un revêtement isolant.

Dans Le cadre de La présente invention et dans tout le présent texte, il faut prendre le terme « couche » dans son sens le plus large : il peut s'agir aussi bien de matériaux minéraux que de matériaux de type organique, des polymères tout particulièrement, pouvant se présenter sous forme de films de polymère ou même de films de gel. Il peut s'agir de système actif dit hybride à savoir associant des matériaux minéraux, inorganiques à des matériaux organiques, polymères.

Il est par ailleurs possible d'envisager des structures de triple vitrage du type substrat 10 / SA1 / lame 15 / substrat 20 / lame 25 / SA2 / substrat 30, où SA1 et SA 2 désignent deux systèmes actifs identiques ou deux systèmes actifs différents, voire deux systèmes actifs couplés entre eux.

Des exemples de systèmes actifs convenant peuvent aussi être trouvés dans la demande de brevet N° EP240226, ou N° EP 1 775 625.

La figure 5 illustre un exemple de quadruple vitrage selon l'invention. Ce quadruple vitrage présente la configuration suivante : 4-12 (Ar 90%)-4-12 (Ar 90%)-4-12 (Ar 90%)-4, c'est-à-dire qu'il est constitué de quatre feuilles de verre transparent de 4 mm, réalisant chacune un substrat 10, 20, 30, 40 séparées deux par deux par une lame de gaz intermédiaire 15, 25, 35 à 90 % d'argon et 10 % d'air d'une épaisseur chacune de 12 mm, le tout étant maintenus ensemble par une structure de châssis 90.

Comme pour l'exemple 2, les deux substrats 10, 40 extérieur de ce quadruple vitrage sont revêtus, chacun, sur sa face intérieure 11, 39 tournée vers la lame de gaz intermédiaire 15, 35, d'un revêtement isolant 14, 36 constitué de l'empilement monocouche fonctionnelle décrit ci-avant : Les empilements monocouche fonctionnelle sont ainsi en faces dites « face 2 » et « face 7 »).

Dans le cadre de ce quadruple vitrage, Les quatre faces 19, 21, 29, 31 des deux substrats 20, 30 centraux, qui sont en contact respectivement avec les lame de gaz intermédiaire 15, 25 et 35, sont chacune revêtue d'un revêtement antireflet 18, 22, 28, 32.

Ce quadruple vitrage permet d'obtenir une isolation thermique encore meilleure que celle de l'exemple 3 et même de l'exemple 4, avec une transmission Lumineuse et un facteur solaire qui sont sensiblement identiques à ceux de ces exemples 3 et 4.

Il est entendu que l'homme du métier est à même de réaliser différentes variantes de l'invention sans pour autant sortir du cadre défini par les revendications.

## Revendications

1. Vitrage multiple (100) comportant au moins trois substrats (10, 20, 30) qui sont maintenus ensemble par une structure de châssis (90), dans lequel au moins deux lames de gaz intermédiaires (15, 25) sont disposées chacune entre deux substrats au moins un substrat (10, 20, 30) comporte sur au moins une face (11, 19, 21, 29) en contact avec une lame de gaz intermédiaire (15, 25) un revêtement antireflet (12, 18, 22) qui est en vis-à-vis par rapport à ladite lame de gaz intermédiaire (15, 25) avec un revêtement isolant (14, 16, 26) à propriétés de réflexion dans l'infrarouge et/ou dans le rayonnement solaire, ***caractérisé en ce que*** ledit revêtement isolant (14, 16, 26) comporte un empilement de couches minces bas-émissif ou de contrôle solaire, cet empilement comportant :
- une seule couche fonctionnelle (140), métallique, à propriétés de réflexion dans l'infrarouge et/ou dans le rayonnement solaire, à base d'argent ou d'alliage métallique contenant de l'argent
- et deux revêtements diélectriques (120, 160), lesdits revêtements comportant chacun au moins une couche diélectrique (122, 124, 126, 162, 164, 166), ladite couche fonctionnelle (140) étant disposée entre les deux revêtements diélectriques (120, 160)
- avec
i- l'épaisseur optique du revêtement diélectrique (120) sous-jacent à la couche fonctionnelle qui est supérieure à l'épaisseur optique du revêtement diélectrique (160) sus-jacent à la couche fonctionnelle, et/ou
ii- la couche fonctionnelle (140) est déposée directement sous un revêtement de sur-blocage (150) disposé entre la couche fonctionnelle (140) et le revêtement diélectrique (160) sus-jacent à la couche fonctionnelle, ledit revêtement de sur-blocage (150) comprenant une couche fine à base de nickel ou de titane présentant une épaisseur géométrique e telle que 0,2 nm ≤ e ≤ 1,8 nm.

2. Vitrage multiple (100) selon la revendication 1, ***caractérisé en ce qu***'un substrat central (20) dont les deux faces (19, 21) sont chacune en contact avec une lame de gaz intermédiaire (15, 25) comporte sur au moins une face en contact avec une lame de gaz intermédiaire, et de préférence sur ses deux faces (19, 21), un revêtement antireflet (18, 22).

3. Vitrage multiple (100) selon la revendication 1 ou la revendication 2, ***caractérisé en ce qu***'en vis-à-vis par rapport à toutes les lames de gaz intermédiaire (15, 25), une face (11, 19, 21, 29) d'un substrat comporte un revêtement antireflet (12, 18, 22) et l'autre face de l'autre substrat comporte un revêtement isolant (14, 16, 26) à propriétés de réflexion dans l'infrarouge et/ou dans le rayonnement solaire.

4. Vitrage multiple (100) selon l'une quelconque des revendications 1 à 3, ***caractérisé en ce que*** la couche fonctionnelle (140) est déposée directement sur un revêtement de sous-blocage (130) disposé entre la couche fonctionnelle (140) et le revêtement diélectrique (120) sous-jacent à ta couche fonctionnelle.

5. Vitrage multiple (100) selon l'une quelconque des revendications 1 à 4, ***caractérisé en ce que*** le rapport de l'épaisseur optique e₁₂₀ du revêtement diélectrique (120) sous-jacent sur l'épaisseur optique e₁₆₀ du revêtement diélectrique (160) sus-jacent, e₁₂₀/e₁₆₀, est compris entre 1,05 et 1,4 en incluant ces valeurs, éventuellement compris entre 1,08 et 1,3 en incluant ces valeurs.

6. Vitrage multiple (100) selon l'une quelconque des revendications 1 à 5, ***caractérisé en ce que*** ledit revêtement diélectrique (120) sous-jacent à la couche fonctionnelle comporte une couche diélectrique (124) hautement réfringente, cette couche hautement réfringente présentant un indice optique supérieur à 2,2, et de préférence compris entre 2,3 et 2,8 en incluant ces valeurs, éventuellement compris entre 2,4 et 2,7 en incluant ces valeurs.

7. Utilisation d'un revêtement antireflet (12, 18, 22) sur au moins une face (11, 19, 21, 29) d'au moins un substrat (10, 20, 30) pour réaliser un vitrage multiple (100) selon l'une quelconque des revendications 1 à 6 comportant au moins trois substrats (10, 20, 30) qui sont maintenus ensemble par une structure de châssis (90) et dans lequel au moins deux lames de gaz intermédiaires (15, 25) sont disposées chacune entre deux substrats, ledit revêtement antireflet (12, 18, 22) étant en contact avec une lame de gaz intermédiaire (15, 25) et étant en vis-à-vis par rapport à ladite lame de gaz intermédiaire (15, 25) avec un revêtement isolant (14, 16, 26) à propriétés de réflexion dans l'infrarouge et/ou dans le rayonnement solaire.

8. Utilisation selon la revendication 7, ***caractérisée en ce que*** la (ou les) face(s) (19, 21) comportant ledit revêtement antireflet (18, 22) est (ou sont) la (ou les) face(s) du substrat central (20) du vitrage multiple (100), lesdites faces (19, 21) étant chacune en contact avec une lame de gaz intermédiaire.

9. Utilisation selon la revendication 7 ou 8, ***caractérisée en ce qu'***en vis-à-vis par rapport à toutes les lames de gaz intermédiaires (15, 25), une face (11, 19, 21, 29) d'un substrat comporte un revêtement antireflet (12, 18, 22) et l'autre face de l'autre substrat comporte un revêtement isolant (14, 16, 26) à propriétés de réflexion dans l'infrarouge et/ou dans le rayonnement solaire.

## Patentansprüche

1. Mehrfachverglasungseinheit (100), umfassend mindestens drei Substrate (10, 20, 30), die von einer Rahmenstruktur (90) zusammen gehalten werden, wobei mindestens zwei intermediäre Gasschichten (15, 25) jeweils zwischen zwei Substraten angeordnet sind,mindestens ein Substrat (10, 20, 30) auf mindestens einer Fläche (11, 19, 21, 29), die sich in Kontakt mit einer intermediären Gasschicht (15, 25) befindet, eine Blendschutzbeschichtung (12, 18, 22) umfasst, die bezogen auf die intermediäre Gasschicht (15, 25) einer Isolationsbeschichtung (14, 16, 26) mit Eigenschaften zur Reflexion von Infrarotstrahlung und/oder von Sonnenstrahlung gegenüberliegt; ***dadurch gekennzeichnet, dass*** die Isolationsbeschichtung (14, 16, 26) eine Aufschichtung aus dünnen schwach emittierenden Schichten oder Sonnenschutzschichten umfasst, wobei die Aufschichtung Folgendes umfasst:
- eine einzige metallische Funktionsschicht (140) auf Basis von Silber oder einer Metalllegierung, die Silber enthält, mit Eigenschaften zur Reflexion von Infrarotstrahlung und/oder von Sonnenstrahlung
- und zwei dielektrische Beschichtungen (120, 160), wobei die Beschichtungen jeweils mindestens eine dielektrische Schicht (122, 124, 126, 162, 164, 166) aufweisen, wobei die Funktionsschicht (140) zwischen den zwei dielektrischen Beschichtungen (120, 160) angeordnet ist
und dabei
i- die optische Dicke der dielektrischen Beschichtung (120) unterhalb der Funktionsschicht größer ist als die optische Dicke der dielektrischen Beschichtung (160) oberhalb der Funktionsschicht und/oder
ii- die Funktionsschicht (140) direkt unter einer oberen Schutzbeschichtung (150) aufgebracht ist, die zwischen der Funktionsschicht (140) und der dielektrischen Beschichtung (160) oberhalb der Funktionsschicht angeordnet ist, wobei die obere Schutzbeschichtung (150) eine dünne Schicht auf Basis von Nickel oder Titan umfasst, die eine geometrische Dicke e aufweist, derart, dass 0,2 nm ≤ e ≤ 1,8 nm gilt.

2. Mehrfachverglasungseinheit (100) nach Anspruch 1, ***dadurch gekennzeichnet, dass*** ein mittleres Substrat (20), dessen zwei Flächen (19, 21) sich jeweils in Kontakt mit einer intermediären Gasschicht (15, 25) befinden, auf mindestens einer Fläche, die sich in Kontakt mit einer intermediären Gasschicht befindet, und bevorzugt auf ihren zwei Flächen (19, 21) eine Blendschutzbeschichtung (18, 22) umfasst.

3. Mehrfachverglasungseinheit (100) nach Anspruch 1 oder Anspruch 2, ***dadurch gekennzeichnet, dass*** gegenüberliegend, bezogen auf alle intermediären Gasschichten (15, 25), eine Fläche (11, 19, 21, 29) eines Substrats eine Blendschutzbeschichtung (12, 18, 22) umfasst und die andere Fläche des anderen Substrats eine Isolationsbeschichtung (14, 16, 26) mit Eigenschaften zur Reflexion von Infrarotstrahlung und/oder von Sonnenstrahlung umfasst.

4. Mehrfachverglasungseinheit (100) nach einem der Ansprüche 1 bis 3, ***dadurch gekennzeichnet, dass*** die Funktionsschicht (140) direkt auf einer unteren Schutzbeschichtung (130) aufgebracht ist, die zwischen der Funktionsschicht (140) und der dielektrischen Beschichtung (120) unterhalb der Funktionsschicht angeordnet ist.

5. Mehrfachverglasungseinheit (100) nach einem der Ansprüche 1 bis 4, ***dadurch gekennzeichnet, dass*** das Verhältnis der optischen Dicke e₁₂₀ der unteren dielektrischen Beschichtung (120) zur optischen Dicke e₁₆₀ der oberen dielektrischen Beschichtung (160), e₁₂₀/e₁₆₀, im Bereich zwischen 1,05 und 1,4 inklusive dieser Werte, eventuell im Bereich zwischen 1,08 und 1,3 inklusive dieser Werte, liegt.

6. Mehrfachverglasungseinheit (100) nach einem der Ansprüche 1 bis 5, ***dadurch gekennzeichnet, dass*** die dielektrische Beschichtung (120) unterhalb der Funktionsschicht eine stark lichtbrechende dielektrische Schicht (124) umfasst, wobei diese stark lichtbrechende Schicht einen Brechungsindex größer als 2,2, bevorzugt im Bereich zwischen 2,3 und 2,8 inklusive dieser Werte, eventuell im Bereich zwischen 2,4 und 2,7 inklusive dieser Werte, aufweist.

7. Verwendung einer Blendschutzbeschichtung (12, 18, 22) auf mindestens einer Fläche (11, 19, 21, 29) mindestens eines Substrats (10, 20, 30) zum Herstellen einer Mehrfachverglasungseinheit (100) nach einem der Ansprüche 1 bis 6, umfassend mindestens drei Substrate (10, 20, 30), die von einer Rahmenstruktur (90) zusammen gehalten werden, und wobei mindestens zwei intermediäre Gasschichten (15, 25) jeweils zwischen zwei Substraten angeordnet sind, wobei die Blendschutzbeschichtung (12, 18, 22) sich in Kontakt mit einer intermediären Gasschicht (15, 25) befindet und bezogen auf die intermediäre Gasschicht (15, 25) einer Isolationsbeschichtung (14, 16, 26) mit Eigenschaften zur Reflexion von Infrarotstrahlung und/oder von Sonnenstrahlung gegenüberliegt.

8. Verwendung nach Anspruch 7, ***dadurch gekennzeichnet, dass*** die Fläche/n (19, 21), die die Blendschutzbeschichtung (18, 22) umfasst/umfassen, die Fläche/n des mittleren Substrats (20) der Mehrfachverglasungseinheit (100) ist/sind, wobei die Flächen (19, 21) sich jeweils in Kontakt mit einer intermediären Gasschicht befinden.

9. Verwendung nach Anspruch 7 oder 8, ***dadurch gekennzeichnet, dass*** gegenüberliegend, bezogen auf alle intermediären Gasschichten (15, 25), eine Fläche (11, 19, 21, 29) eines Substrats eine Blendschutzbeschichtung (12, 18, 22) umfasst und die andere Fläche des anderen Substrats eine Isolationsbeschichtung (14, 16, 26) mit Eigenschaften zur Reflexion von Infrarotstrahlung und/oder von Sonnenstrahlung umfasst.

## Claims

1. A multiple glazing unit (100) comprising at least three substrates (10, 20, 30) which are held together by a frame structure (90), in which at least two intermediate gas-filled cavities (15, 25) lie each between two substrates, at least one substrate (10, 20, 30) has, on at least one face (11, 19, 21, 29) in contact with an intermediate gas-filled cavity (15, 25), an antireflection film (12, 18, 22) which is in a face-to-face relationship, relative to said intermediate gas-filled cavity (15, 25), with an insulating film (14, 16, 26) having reflection properties in the infrared and/or in solar radiation, ***characterized in that*** said insulating film (14, 16, 26) comprises a low-E or solar-control thin-layers stack, this thin-layers stack comprising:
- only one metallic functional layer (140) having reflection properties in the infrared and/or in solar radiation, based on silver or on a silver-containing metal alloy
- and two dielectric films (120, 160), said films each comprising at least one dielectric layer (122, 124, 126, 162, 164, 166), said functional layer (140) being placed between the two dielectric films (120, 160)
- with
i- the optical thickness of the dielectric film (120) subjacent to the functional layer being greater than the optical thickness of the dielectric film (160) superjacent to the functional layer and/or
ii- the functional layer (140) is deposited directly beneath an overblocker film (150) placed between the functional layer (140) and the dielectric film (160) superjacent to the functional layer, said overblocker film (150) comprising a thin layer based on nickel or titane having a thickness e such that 0.2 nm ≤ e ≤1,8 nm.

2. The multiple glazing unit (100) as claimed in claim 1, ***characterized in that*** a central substrate (20), the two faces (19, 21) of which are each in contact with an intermediate gas-filled cavity (15, 25), has an antireflection film (18, 22) on at least one face in contact with an intermediate gas-filled cavity and preferably on both its faces (19, 21) .

3. The multiple glazing unit (100) as claimed in claim 1 or 2, ***characterized in that*** in a face-to-face relationship relative to all the intermediate gas-filled cavities (15, 25), one face (11, 19, 21, 29) of one substrate has an antireflection film (12, 18, 22) and the other face of the other substrate has an insulating film (14, 16, 26) having reflection properties in the infrared and/or in solar radiation.

4. The multiple glazing unit (100) as claimed in any of claims 1 to 3, ***characterized in that*** said functional layer (140) is deposited directly on an underblocker film (130) placed between the functional layer (140) and the dielectric film (120) subjacent to the functional layer.

5. The multiple glazing unit (100) as claimed in any of claims 1 to 4, ***characterized in that*** the ratio of the optical thickness e₁₂₀ of the subjacent dielectric film (120) to the optical thickness e₁₆₀ of the superjacent dielectric film (160), e₁₂₀/ e₁₆₀, preferably being between 1.05 and 1.4, including these values, and optionally between 1.08 and 1.3, including these values.

6. The multiple glazing unit (100) as claimed in any one of claims 1 to 5, ***characterized in that*** said dielectric film (120) subjacent to the functional layer comprises a highly refringent dielectric layer (124), this highly refringent layer having an optical index greater than 2.2, preferably between 2.3 and 2.8 including these values, and optionally between 2.4 and 2.7 including these values.

7. The use of an antireflection film (12, 18, 22) on at least one face (11, 19, 21, 29) of at least one substrate (10, 20, 30) for producing a multiple glazing unit (100) as claimed in any one of claims 1 to 6, comprising at least three substrates (10, 20, 30) which are held together by a frame structure (90), in which multiple glazing unit at least two intermediate gas-filled cavities (15, 25) lie each between two substrates, said antireflection film (12, 18, 22) being in contact with an intermediate gas-filled cavity (15, 25) and being in a face-to-face relationship, relative to said intermediate gas-filled cavity (15, 25), with an insulating film (14, 16, 26) having reflection properties in the infrared and/or in solar radiation.

8. The use as claimed in claim 7, ***characterized in that*** the face(s) (19, 21) having said antireflection film (18, 22) is (are) the face(s) of the central substrate (20) of the multiple glazing unit (100), said faces (19, 21) each being in contact with an intermediate gas-filled cavity.

9. Use according to claim 7 or 8, ***characterized in that***, in a face-to-face relationship, relative to all the intermediate gas-filled cavities (15, 25), one face (11, 19, 21, 29) of one substrate has an antireflection film (12, 18, 22) and the other face of the other substrate has an insulating film (14, 16, 26) having reflection properties in the infrared and/or in solar radiation.
